(19) Europäisches Patentamt

European Patent Office

Office européen des brevets

(11) EP 2 788 218 B1

## (12) FASCICULE DE BREVET EUROPEEN

(45) Date de publication et mention de la délivrance du brevet:
**04.11.2020 Bulletin 2020/45**

(21) Numéro de dépôt: **12794352.0**

(22) Date de dépôt: **03.12.2012**

(51) Int Cl.:
**B60L 7/26** *(2006.01)*    **B60L 7/22** *(2006.01)*

(86) Numéro de dépôt international:
**PCT/EP2012/074259**

(87) Numéro de publication internationale:
**WO 2013/083525 (13.06.2013 Gazette 2013/24)**

(54) **CONTROLE DU FREINAGE**

ÜBERWACHUNG VON BREMSVORGÄNGEN

BRAKING SUPERVISION

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **05.12.2011 FR 1161137**

(43) Date de publication de la demande:
**15.10.2014 Bulletin 2014/42**

(73) Titulaire: **Renault S.A.S.**
**92100 Boulogne-Billancourt (FR)**

(72) Inventeurs:
- **PITA-GIL, Guillermo**
  **75014 PARIS (FR)**
- **AZZI, Hamid**
  **F-78310 Maurepas (FR)**
- **AMARA, Sofiane**
  **F-75013 Paris (FR)**

(56) Documents cités:
**DE-A1-102005 003 159    US-A1- 2003 184 155**

**Description**

La présente invention concerne le contrôle du freinage pour un véhicule équipé d'un moyen de freinage régénératif, par exemple un moyen de freinage électrique, et d'un moyen de freinage complémentaire, par exemple un moyen de freinage hydraulique.

Le véhicule peut par exemple être un véhicule électrique ou hybride.

Sur un véhicule équipé d'au moins un moteur de traction ou de propulsion électrique, il est possible, sous certaines conditions, d'utiliser le moteur électrique comme générateur et d'obtenir ainsi un moyen de freinage électrique. Une telle utilisation est avantageuse car régénérative, elle permet de récupérer une partie de l'énergie afin de recharger les batteries.

Néanmoins, dans le cas de véhicules ainsi équipés d'un actionneur électrique permettant un freinage régénératif, et d'un actionneur hydraulique d'un frein à friction classique, il a été observé que pour une consigne de freinage donnée (i.e., une consigne utilisateur, c'est-à-dire un appui sur la pédale de freinage donné), le niveau de décélération est susceptible d'être différent selon la répartition entre le freinage hydraulique et le freinage électrique.

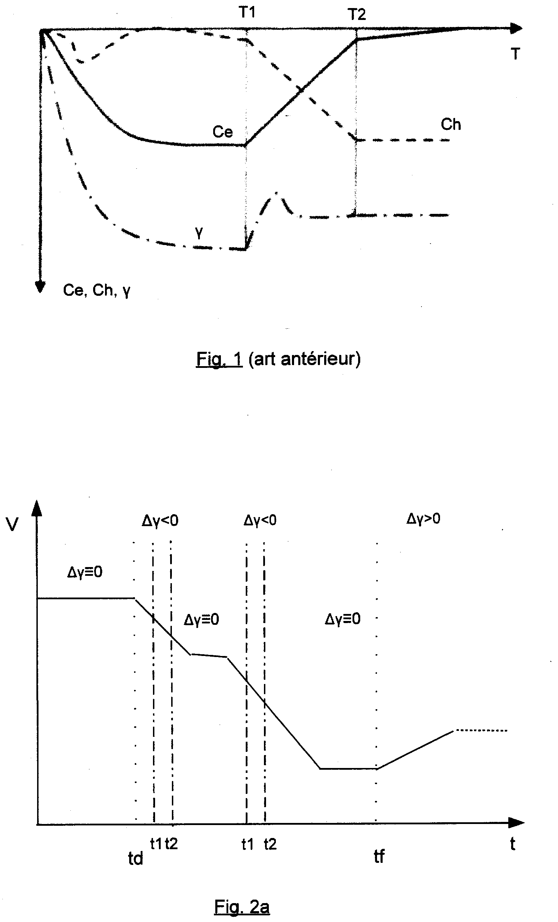

En référence à la figure 1, on a représenté, sur une séquence ou transition de freinage, l'évolution temporelle des couples de freinage et de l'accélération du véhicule, avec, en abscisse, le temps, sachant que le conducteur applique une consigne de freinage constante de sorte que le véhicule ralentisse au fur et à mesure, et, en ordonnée, le couple électrique Ce, le couple hydraulique Ch et l'accélération (ou décélération) résultante $\gamma$.

Il se trouve que le système de répartition entre freinage électrique et freinage hydraulique est agencé de façon à interdire le freinage électrique en-dessous de 7 km/h. La coupure est graduelle, entre 14 et 7 km/h. L'instant T1 correspond à un seuil de 14 km/h à partir duquel le freinage régénératif est peu à peu désactivé, et l'instant T2 correspond à un seuil de 7 km/h.

La courbe en points-tirets représente le couple correspondant à la décélération observée. Comme on peut le constater pour les instants légèrement inférieurs à T1 pour lesquels le freinage est quasiment entièrement électrique, le couple appliqué est supérieur au couple appliqué pour les instants légèrement supérieurs à T2, pour lesquels le freinage est quasiment entièrement hydraulique. Ce gap est dû à l'imprécision de l'efficacité de l'actionneur hydraulique.

Ceci peut être relativement perturbant pour l'utilisateur, dans la mesure où l'utilisateur peut avoir la sensation que le véhicule est susceptible de ne pas réaliser le même freinage pour une commande donnée.

L'actionneur électrique peut avoir une précision de l'ordre de 5%, en revanche l'efficacité de l'actionneur hydraulique peut varier avec le temps et présenter des écarts de l'ordre de 30 ou 40%. L'efficacité de l'actionneur hydraulique est en effet fonction notamment de l'état d'usure des plaquettes de frein et de la température.

Il existe donc un besoin pour un comportement des véhicules au freinage plus prédictible et plus constant pour l'utilisateur.

Le document US 2008/0129110 décrit un procédé de contrôle du freinage avec récupération d'énergie comprenant :

-    une étape de mesure de l'accélération lorsque le véhicule atteint une certaine vitesse pour laquelle cette accélération est supposée résulter uniquement de l'efficacité du moyen de freinage électrique ;
-    une étape de mesure de l'accélération pour une autre vitesse du véhicule, cette autre vitesse étant telle que l'accélération est supposée résulter uniquement de l'efficacité du moyen de freinage hydraulique, ces deux mesures étant prises pour une même valeur de consigne de freinage appliquée par le conducteur,
-    une étape de calcul du ratio des efficacités de freinage, en effectuant le ratio des accélérations mesurées,
-    une étape d'application du ratio des efficacités de freinage à la commande de freinage hydraulique.

Ce procédé est ensuite répété jusqu'à converger vers un gap réduit à zéro.

Les conditions de mesure sont délicates à obtenir, et la convergence relativement lente. En outre, on a une grande dépendance aux conditions de mesure. En particulier, la mesure est segmentée sur des plages de vitesses, ce qui nuit à la généralité du procédé.

Il existe un besoin pour un procédé moins contraignant et plus efficace.

Il est proposé un procédé de contrôle du freinage pour un véhicule équipé d'un moyen de freinage régénératif, par exemple un moyen de freinage électrique, et d'un moyen de freinage complémentaire, par exemple un moyen de freinage hydraulique. Le procédé comprend :

-    recevoir au moins une paire de deux valeurs de mesure d'accélération du véhicule, cette au moins une paire de deux valeurs étant effectuée pendant une transition de freinage au cours de laquelle le moyen de freinage régénératif et/ou le système de freinage complémentaire appliquent un effort de freinage au véhicule, la transition de freinage correspondant à l'évolution de la répartition entre le moyen de freinage régénératif et le système de freinage complémentaire,

- calculer au moins une valeur de variation d'accélération à partir respectivement de ladite au moins une paire de mesure,
- pour chaque valeur d'accélération reçue, recevoir une valeur de couple appliqué par le moyen de freinage régénératif et une valeur de consigne de freinage complémentaire destinée au moyen de freinage complémentaire correspondant à l'instant de mesure de ladite valeur d'accélération,
- dans lequel l'estimation du coefficient d'efficacité du moyen de freinage complémentaire est effectuée à partir de la valeur de variation de l'accélération calculée, d'au moins une valeur de couple appliqué par le moyen de freinage régénératif, et de cette au moins une valeur de variation de consigne de freinage complémentaire destinée au moyen de freinage complémentaire.

Ainsi, en impliquant le couple appliqué par le moyen de freinage régénératif, par exemple un couple électrique moteur, et la consigne de freinage complémentaire, ce procédé permet une estimation du coefficient d'efficacité du moyen de freinage complémentaire à des instants quelconques d'une transition de freinage. Le ou les instant(s) de mesure de l'accélération peuvent donc être choisis indépendamment de la vitesse du véhicule. En outre, au cours de cette transition, l'appui pédale du conducteur peut varier sans que cela n'affecte réellement l'estimation, contrairement à l'art antérieur. Ce procédé est donc avantageux en ce sens qu'il permet d'utiliser de plus nombreux points de mesure que dans l'art antérieur.

Une fois le coefficient d'efficacité estimé, on peut prévoir une étape de correction des valeurs de consigne de freinage complémentaire de façon à tenir compte de cette efficacité, et donc assurer un meilleur confort utilisateur.

On peut en outre prévoir une détection d'usure des plaquettes de freins à partir du coefficient d'efficacité estimé, et la transmission éventuelle d'un signal d'alarme pour signaler qu'un remplacement est nécessaire. Ceci peut permettre une maintenance adaptée à l'usure réelle. Ainsi, par « contrôle du freinage », on peut entendre « commande du freinage », mais aussi « surveillance du freinage ».

La valeur de couple électrique moteur peut par exemple être mesurée.

Alternativement, cette valeur de couple peut être estimée égale à une valeur de consigne de freinage électrique destinée au moyen de freinage électrique. Dit autrement, on estime que l'efficacité du moyen de freinage électrique est de 1 (ou de 100%).

Selon un autre mode de réalisation, on pourrait prévoir d'estimer en outre un coefficient d'efficacité du freinage régénératif, par exemple en effectuant davantage de mesures d'accélération.

Les valeurs de consigne de freinage électrique et complémentaire peuvent être déterminées par un dispositif de répartition d'une commande de freinage globale entre le moyen de freinage régénératif et le moyen de freinage complémentaire. Ce dispositif de répartition reçoit en entrée une valeur de commande de freinage globale, correspondant à un appui pédale donné, et détermine à partir de cette valeur de commande et d'autres paramètres, comme par exemple la vitesse du véhicule, un signal indicateur de stabilité, etc., une valeur de consigne de freinage régénératif et une valeur de consigne de freinage complémentaire. C'est ce dispositif de répartition qui peut commander en particulier une transition du tout électrique vers le tout hydraulique entre 14 et 7 km/h.

L'étape d'estimation décrite ci-dessus peut reposer sur une application du principe fondamental de la dynamique.

Avantageusement et de façon non limitative, pour au moins une paire de valeur des mesure d'accélération, les deux instants de mesure correspondant à cette paire sont relativement proches, c'est-à-dire suffisamment proches pour que la variation des paramètres dynamiques extérieurs du véhicule puisse être négligée.

La durée entre ces deux instants de mesure peut par exemple être inférieure à 5 secondes avantageusement inférieure à 2 secondes, avantageusement inférieure à 1 seconde, avantageusement inférieure à 0,5 seconde, avantageusement supérieure à 0,0001 seconde.

Ceci peut ainsi permettre de choisir les instants de mesure sans tenir compte des éventuels paramètres dynamiques extérieurs susceptibles d'avoir une influence sur l'accélération du véhicule, comme la force et la direction du vent, l'état de la route, la pente de la route, etc.

Avantageusement et de façon non limitative, on peut prévoir de recevoir une pluralité de valeurs de mesure d'accélération, une pluralité de valeurs de consigne de freinage complémentaire correspondantes et une pluralité de valeurs de couple appliqué par le moyen de freinage régénératif correspondantes.

Avantageusement et de façon non limitative, on peut estimer une valeur statistique du coefficient de freinage. Ceci peut permettre d'éviter les variations brutales de l'estimation liées à l'implémentation d'une étape de division par une valeur très faible.

Alternativement, on pourrait bien entendu prévoir de déterminer chaque valeur de coefficient d'efficacité à partir d'un ensemble de valeurs (mesure d'accélération, valeur de couple de freinage régénératif, valeur de consigne de freinage complémentaire) correspondant à un instant donné ou à une paire d'instants donnés. Les valeurs du coefficient d'efficacité ainsi obtenues étant susceptibles de varier au cours du temps, du fait de l'erreur introduite par des éventuels paramètres dynamiques extérieurs et/ou par des éventuelles divisions par des valeurs proches de zéro, on pourra prévoir de filtrer et/ou moyenner ces valeurs.

Avantageusement et de façon non limitative, l'étape d'estimation peut en outre être fonction de paramètres physiques du véhicule, par exemple la masse du véhicule et le rayon des roues du véhicule.

Avantageusement et de façon non limitative, le procédé peut comprendre la réception d'une pluralité de paires de valeurs de mesure d'accélération, l'estimation étant effectuée en fonction de cette pluralité de paires de valeurs.

Avantageusement et de façon non limitative, l'étape d'estimation peut en outre être fonction d'au moins une valeur de coefficient d'efficacité du moyen de freinage complémentaire précédente(s).

Avantageusement et de façon non limitative, l'étape d'estimation est effectuée selon une méthode des moindres carrés.

Avantageusement et de façon non limitative, l'étape d'estimation est effectuée selon une méthode des moindres carrés récursifs.

Avantageusement et de façon non limitative, l'étape d'estimation est effectuée selon une méthode des moindres carrés récursifs, à facteur d'oubli.

Le facteur d'oubli peut avantageusement être variable, ou ajustable. On peut prévoir d'ajuster le facteur d'oubli selon l'application souhaitée. Par exemple, pour estimer une usure des plaquettes de frein, on pourra choisir un facteur d'oubli correspondant à une constante de temps relativement longue, de l'ordre de la dizaine de jours. Pour adapter l'efficacité de l'actionneur hydraulique aux conditions de température et autres, une constante de temps de quelques minutes pourra être choisie.

Avantageusement et de façon non limitative, on peut prévoir de déterminer les valeurs du facteur d'oubli en fonction du temps de roulage. Le facteur d'oubli peut être choisi faible au démarrage, puis augmenter progressivement. Ceci permet d'adapter la rapidité de la convergence de l'estimation.

Avantageusement et de façon non limitative, on peut prévoir de déterminer les valeurs du facteur d'oubli en fonction en outre d'autres conditions susceptibles d'affecter l'efficacité du moyen de freinage complémentaire : longue période d'inutilisation du véhicule, changement de température, changement des plaquettes, etc.

Avantageusement et de façon non limitative, le facteur d'oubli peut être compris entre 0,9 et 1, la valeur 1 étant exclue.

L'invention n'est en rien limitée par ce choix d'une méthode par moindres carrés, ni même par le choix d'une méthode statistique.

En particulier, on peut prévoir la mise en œuvre des étapes suivantes :

- mesurer la variation de traînée de freinage globale, entre au moins deux instants successifs, variation établie en fonction de la variation du couple de freinage par friction, de la variation du couple électrique moteur et des paramètres physiques dimensionnels et dynamiques extérieurs du véhicule ;
- établir, entre lesdits au moins deux instants successifs, la variation de traînée engendrée par le système de freinage à friction, selon une fonction linéaire de la variation de traînée globale de freinage, de la variation de couple électrique moteur, et de la variation des paramètre dynamiques extérieurs dudit véhicule, et, la variation de traînée engendrée par le système de freinage à friction étant établie comme le produit d'une valeur de consigne de couple de freinage à friction et du coefficient d'efficacité de freinage,
- répéter, au cours de transitions de freinage successives, les étapes précédentes pour calculer une valeur statistique du coefficient de freinage.

Il est en outre proposé un dispositif de contrôle du freinage pour un véhicule équipé d'un moyen de freinage régénératif, par exemple un moyen de freinage électrique, et d'un moyen de freinage complémentaire, par exemple un moyen de freinage hydraulique. Le dispositif comprend :

- des moyens de réception d'au moins une paire de deux valeurs de mesure d'accélération du véhicule, ladite au moins une paire de deux valeurs étant effectuée pendant une transition de freinage au cours de laquelle le moyen de freinage régénératif et/ou le système de freinage complémentaire appliquent un effort de freinage au véhicule, la transition de freinage correspondant à l'évolution de la répartition entre le moyen de freinage régénératif et le système de freinage complémentaire,
- des moyens de calcul d'au moins une valeur de variation d'accélération à partir respectivement de ladite au moins une paire de mesure,
- des moyens de réception d' au moins deux valeurs de couple appliqué par le moyen de freinage régénératif et d'au moins deux valeurs de consigne de freinage complémentaire destinée au moyen de freinage complémentaire, lesdites au moins deux valeurs de couple et de consigne correspondant aux deux instants de mesure de ladite au moins une paire de valeurs d'accélération,
- des moyens de traitement pour estimer le coefficient d'efficacité du moyen de freinage complémentaire à partir de ladite valeur de variation de l'accélération, de ladite variation de couple appliqué par le moyen de freinage régénératif reçue, et de ladite variation de consigne de freinage complémentaire reçue.

Ce dispositif peut être agencé de façon à pouvoir mettre en œuvre le procédé décrit ci-dessus.

Ce dispositif peut par exemple comprendre ou être intégré dans un processeur, par exemple un microcontrôleur, un microprocesseur ou bien encore un DSP (de l'anglais « Digital Signal processor »).

Les moyens de réception peuvent par exemple comprendre un port d'entrée, un premier processeur, ou autre, et les moyens de traitement peuvent par exemple comprendre un cœur de processeur, un deuxième processeur, ou autre.

Il est en outre proposé un système de commande de freinage comportant un dispositif de répartition d'une commande de freinage globale entre le moyen de freinage régénératif et le moyen de freinage complémentaire, ainsi qu'un dispositif de contrôle tel que décrit ci-dessus.

Il est en outre proposé un véhicule comprenant un moyen de freinage régénératif, un moyen de freinage complémentaire et un dispositif et/ou un système tel que décrit ci-dessus.

Le procédé et le dispositif objets de l'invention seront mieux compris à la lecture de la description et à l'observation des dessins ci-après dans lesquels, outre la figure 1 commentée ci-dessus,

- la figure 2a représente, à titre illustratif, un diagramme temporel représentatif lors d'une transition ou séquence de freinage d'un véhicule ;
- la figure 2b représente, à titre illustratif, un organigramme d'un exemple de procédé selon un mode de réalisation de l'invention;
- la figure 3 représente, à titre illustratif, un diagramme temporel de l'évolution de l'efficacité de freinage estimée avant filtrage spécifique;
- la figure 4 représente un schéma fonctionnel d'un exemple de dispositif selon un mode de réalisation de l'invention.

Sur la figure 2a, sur le chronogramme de vitesse V du véhicule en fonction du temps t, on considère un véhicule automobile dans lequel le conducteur exécute, par exemple, une séquence de freinage, le véhicule roulant dans une première étape à vitesse sensiblement constante, $\Delta\gamma=0$, puis en décélération, $\Delta\gamma<0$, par commande de la pédale de frein, par exemple à l'entrée d'un virage, suivie d'une courte étape à vitesse sensiblement constante, $\Delta\gamma=0$, puis lors de la rencontre soudaine d'un obstacle, nouvelle étape de décélération, $\Delta\gamma<0$, par commande de la pédale de frein, suivie d'une deuxième étape à vitesse sensiblement constante, $\Delta\gamma=0$ puis d'une nouvelle période d'accélérations, $\Delta\gamma>0$, lorsque l'obstacle a disparu après sortie du virage.

Le véhicule est considéré être équipé d'un système de freinage à friction et d'un système de freinage par récupération d'énergie électrique, chacun des systèmes de freinage précités exerçant, lors de chaque transition de freinage déterminé entre les instants de début de freinage td et de fin de freinage tf un effort de freinage donné.

Sur la figure 2a, la séquence ou transition de freinage est représentée entre les instants td et tf de début et de fin de freinage précités.

On mesure la variation de traînée de freinage globale entre deux instants successifs t1 et t2, ces instants étant entre les instants de transition de freinage td et tf.

En appliquant le principe fondamental de la dynamique aux instants successifs t1 et t2 précités, cette variation peut être exprimée en fonction de la variation du couple de freinage par friction, de la variation du couple électrique moteur et des paramètres physiques dimensionnels et dynamiques extérieurs du véhicule.

L'application du principe fondamental de la dynamique aux deux instants successifs précités s'écrit selon la relation (1) :

$$M\gamma(t1) = [Chv(t1) + Ce(t1)]/R + Fe(t1) \; ; (a)$$

$$M\gamma(t2) = [Chv(t2) + Ce(t2)]/R + Fe(t2) \; ; (b).$$

Dans la première égalité (a) de cette relation, M désigne la masse du véhicule, $\gamma(t1)$ désigne l'accélération instantanée du véhicule mesurée à l'instant t1, Chv(t1) désigne la valeur vraie du couple hydraulique appliqué par le système de freinage à friction au véhicule à l'instant t1, Ce(t1) désigne la valeur instantanée du couple électrique à l'instant t1 exercé par le freinage par récupération d'énergie électrique, R désigne le rayon des roues du véhicule et Fe(t1) désigne l'effort extérieur appliqué au véhicule à l'instant t1 précité. Les paramètres M et R constituent les paramètres physiques dimensionnels du véhicule.

Dans la deuxième égalité (b) de la relation (1), les mêmes variables désignent les mêmes entités physiques prises à l'instant t2.

L'établissement de la variation de traînée de freinage globale est obtenu par la différence entre la deuxième (b) et la première (a) égalité de la relation (1). Cette variation est notée selon la relation (2) :

$$M*\Delta\gamma=M\gamma(t2)-M\gamma(t1)=[(Chv(t2)-Chv(t1)+Ce(t2)-Ce(t1)]/R+(Fe(t2)-Fe(t1))$$

Dans la relation (2) on désigne par :

$$Chv(t2)-Chv(t1) = \Delta Chv = \Delta Chc*\alpha,$$

variation du couple de freinage par friction entre les instants t1 et t2, cette variation de couple étant encore exprimée comme le produit de la variation de la valeur de consigne du couple hydraulique de freinage exercé par le système de freinage à friction entre les instants t1 et t2, noté $\Delta$Chc, et de la valeur du coefficient d'efficacité de freinage $\alpha$ estimée entre au moins deux instants d'évaluation tels que les instants t1 et t2.

On peut donc exprimer la variation de traînée entre les deux instants successifs t1 et t2 selon une fonction linéaire de la variation de traînée globale de freinage, de la variation de couple électrique moteur et de la variation des paramètres dynamiques extérieurs du véhicule.

La variation de traînée engendrée par le système de freinage à friction est établie comme le produit d'une valeur de consigne de couple de freinage à friction et du coefficient d'efficacité de freinage.

En choisissant les instants successifs t1 et t2 suffisamment proches l'un de l'autre, on peut négliger la variation des forces extérieures au véhicule. Dit autrement, l'expression Fe(t2)-Fe(t1) peut être négligée, notamment vis-à-vis de l'effort de freinage hydraulique.

Cette opération est notée selon la relation (3) :

$$M*\Delta\gamma=[(Chv(t2)-Chv(t1)+Ce(t2)-Ce(t1)]/R+(Fe(t2)-Fe(t1))$$

Dans cette situation, la fonction linéaire consiste en la différence de la variation de traînée globale de freinage et de la variation du couple électrique moteur exprimé selon la relation (4) :

$$M*\Delta\gamma=[(Chv(t2)-Chv(t1)+(Ce(t2)-Ce(t1)]/R + [(Fe(t2)-Fe(t1))\equiv0]$$

soit,

$$\Delta Chc*\alpha = RM*\Delta\gamma - \Delta Ce.$$

Dans cette relation la variation de traînée engendrée par le système de freinage à friction est notée comme le produit de la variation de la valeur de consigne du couple hydraulique de freinage exercé par le système de freinage à friction entre les instants t1 et t2, par la valeur du coefficient d'efficacité de freinage a.

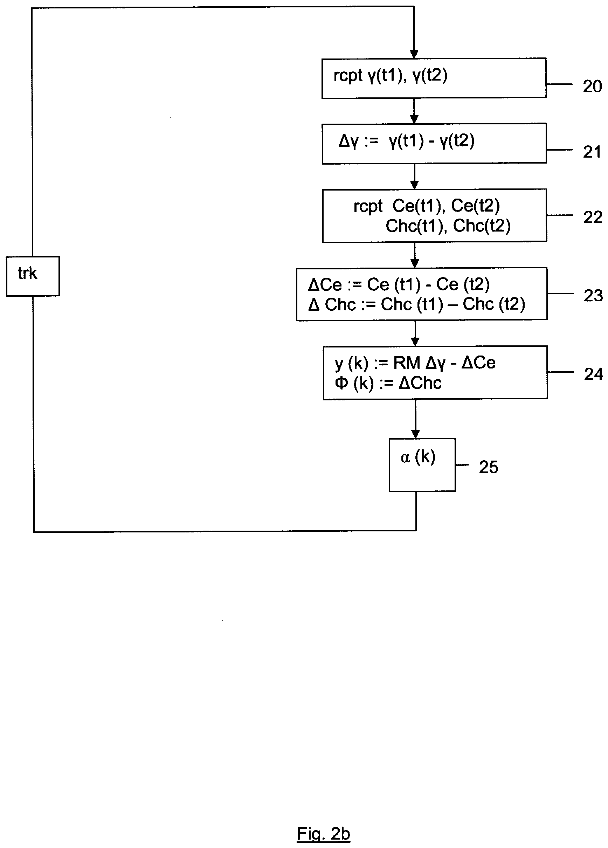

En référence à la figure 2b, les valeurs d'accélération du véhicule $\gamma$(t1), $\gamma$(t2) sont reçues d'un accéléromètre lors d'une étape 20, puis une différence entre ces valeurs est calculée lors d'une étape 21.

Par ailleurs, des valeurs de couple électrique Ce(t1), Ce(t2) sont reçues lors d'une étape 22, ainsi que des valeurs de consigne du couple de freinage hydraulique Chc(t1), Chc(t2). Des différences entre ces valeurs respectives sont calculées lors d'une étape 23.

Puis, lors d'une étape 24, est calculée une valeur $\Phi$(k) = $\Delta$Chc et une valeur y(k) =RM*$\Delta\gamma$ - $\Delta$Ce.

L'étape 25 représente l'estimation du coefficient d'efficacité $\alpha$(k) du moyen de freinage hydraulique, par exemple un actionneur hydraulique.

Une application d'optimisation de l'effort de freinage peut consister alors à appliquer, pour chaque transition de freinage, la valeur statistique du coefficient de freinage $\alpha$(k) estimée et/ou actualisée sur un ou plusieurs couples d'instants successifs antérieurs t1 et t2 lors de toute transition de freinage ultérieure sur un ou plusieurs couples d'instants successifs ultérieurs t1, t2, ainsi qu'il sera décrit en détail ultérieurement dans la description .

On conçoit en particulier, en référence à la figure 2a, que le processus peut-être répété ou non sur un ou plusieurs couples d'instants t1 et t2 et que la valeur de l'efficacité de freinage ainsi déterminée peut-être mémorisée et actualisée pour application de l'optimisation de la valeur de la variation de traînée engendrée par le système de freinage à friction, dont la valeur est ainsi optimisée à la différence de la variation de traînée globale de freinage et de la variation du couple électrique moteur.

Sur la figure 2b, la répétition éventuelle du processus précédemment décrit est représentée par la boucle de retour au bout d'un temps trk. La durée trk n'est pas déterminée et ne dépend que du parcours du véhicule automobile, ainsi que représenté en figure 2a.

L'opération d'optimisation de la variation de traînée engendrée par le système de freinage à friction est exécutée sensiblement en temps réel, grâce au processus d'estimation et/ou d'actualisation du coefficient d'efficacité de freinage α au cours de tout déplacement du véhicule.

Le processus d'estimation et/ou d'actualisation du coefficient d'efficacité de freinage α sera maintenant décrit en détail ci-après.

D'une manière générale, on indique que le véhicule est avantageusement équipé, outre le système de commande de freinage, de capteurs de mesure de l'accélération linéaire du véhicule, l'ensemble de ces capteurs étant, par exemple, piloté par un calculateur dédié ou par l'ordinateur de bord du véhicule. L'équipement correspondant sera décrit plus en détail ultérieurement dans la description.

On comprend que la notion de mesure et de calcul aux instants successifs t1, t2 est distincte de la notion d'échantillonnage électronique des capteurs. Dans un mode de mise en œuvre avantageux spécifique, pour une période d'échantillonnage électronique des capteurs, notée Te, la durée séparant deux instants successifs t1 et t2 peut avantageusement être prise égale à un multiple de quelques périodes d'échantillonnage électronique Te. Ceci permet de satisfaire aux critères d'instants successifs suffisamment proches vis-à-vis de la dynamique du véhicule et de chaque transition de freinage exécutée.

En outre, et dans le but d'assurer une convergence rapide de la valeur estimée et/ou actualisée du coefficient d'efficacité de freinage a, la méthode d'estimation exécutée est avantageusement la méthode des moindres carrés récursifs à facteur d'oubli variable, appliquée aux estimations et/ou actualisations obtenues pour deux des estimations et/ou actualisations successives. Le facteur d'oubli permet de pondérer l'effet des estimations et/ou actualisations antérieures successives.

La méthode d'estimation et/ou d'actualisation précitée est remarquable par le fait qu'il est ainsi possible d'adapter le facteur d'oubli en fonction de phases de vie du véhicule, telles que modifications ou entretiens du système de freinage hydraulique par changement des plaquettes de friction par exemple.

Ainsi, pour chaque estimation exécutée chacune pour un couple d'instants successifs t1 et t2, la méthode d'estimation et/ou d'actualisation consiste avantageusement à calculer successivement la valeur estimée du coefficient d'efficacité de freinage α(k) selon la relation (5) :

$$\alpha[k] = \alpha[k\text{-}1] + L[k](y[k] - \Phi[k]\alpha[k\text{-}1])$$

$$L[k] = P[k\text{-}1]* \Phi[k]/(\lambda+ \Phi[k]*P[k\text{-}1] \Phi[k])$$

$$P[k] = (1\text{-}L[k]* \Phi[k])*P[k\text{-}1]/\lambda.$$

Dans cette relation,

α[k] et α[k-1] désignent la valeur estimée et/ou actualisée du coefficient d'efficacité de freinage aux instants d'estimation de rang actuel k et antérieur k-1 ;
y(k) = RMΔγ-Δce désigne, selon la relation (4), la valeur du produit ΔChc*α aux instants d'estimation et/ou d'actualisation de rang k, α(k) étant la valeur du coefficient d'efficacité de freinage α(k) de rang k à estimer et/ou actualiser;
Φ[k] = ΔChc désigne la valeur mesurée et calculée de la variation de consigne de couple hydraulique de freinage exercé par le système de freinage à friction aux instants d'estimation et/ou d'actualisation de rang k ;
P[k-1] désigne la covariance du coefficient d'efficacité de freinage α aux instants d'estimation de rang antérieur k-1 ;
L[k] est une fonction spécifique de la covariance P[k-1] du coefficient d'efficacité de freinage de rang antérieur k-1 ;
λ désigne le facteur d'oubli.

La méthode des moindres carrés récursifs à facteur d'oubli variable apparaît remarquable en ce que cette dernière est simple de mise en œuvre, ne demande pas de moyens de calculs sophistiqués et ne nécessite pas le stockage de beaucoup de valeurs en mémoire, dans la mesure où les opérations sont effectuées pour les valeurs successives de rang antérieur k-1 et actuel k.

L'initialisation de l'ensemble et en particulier de l'algorithme de calcul des moindres carrés récursifs se limite en outre au choix de trois paramètres :

- la valeur $\alpha(0)$ du coefficient d'efficacité de freinage à l'instant d'initialisation t= 0, soit pour k = 0 ;
- la valeur du facteur d'oubli $\lambda$;
- la valeur de la covariance initiale P(0).

Lors de l'estimation d'une valeur d'efficacité de freinage, la valeur estimée est de préférence filtrée au moyen d'un filtre de type "Rate Limiter". On limite la valeur absolue de la dérivée du signal afin d'éviter les à-coups.

La solution d'estimation proposée permet une convergence rapide vers une valeur stable du coefficient d'efficacité de freinage. Si l'on souhaite simplement détecter les variations de ce coefficient dues à l'usure des plaquettes ou à la variation saisonnière de la température, le choix de la rampe, pente donnée par la covariance P(k-1), dépend essentiellement de la dynamique des variations que l'on souhaite estimer. Si au contraire on souhaite adapter l'efficacité de freinage aux conditions de température, une constante de temps ou pente de quelques minutes est choisie.

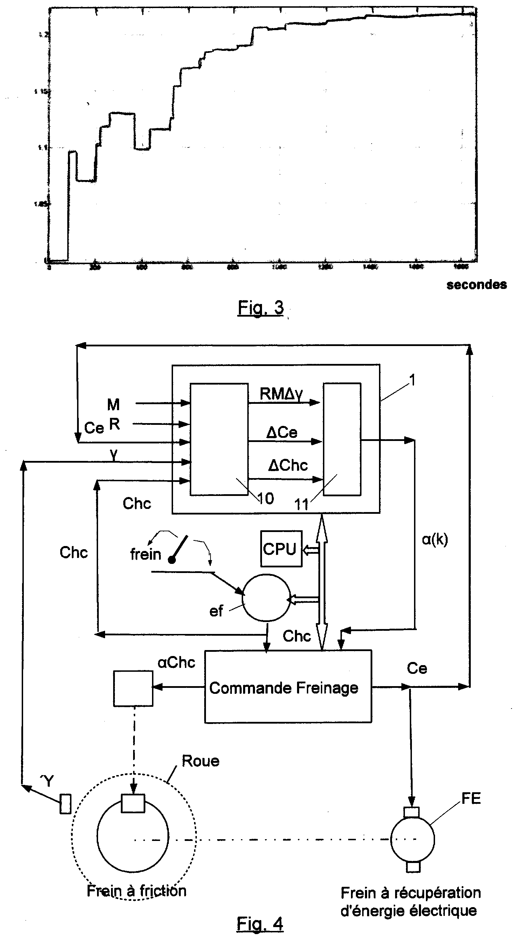

Un résultat d'estimation d'une valeur d'efficacité de freinage $\alpha(k)$ est représenté en figure 3, lors d'un essai exécuté en milieu urbain sur un site de roulage ville en région parisienne, de Paris à Saint-Cloud sur une durée de 4 heures. Sur cette figure, l'axe des ordonnées est gradué en valeur relative du coefficient d'efficacité de freinage et l'axe des abscisses en temps en secondes.

Sur la figure 3, la courbe I représente la sortie de l'estimateur par moindres carrés récursifs à facteur d'oubli variable.

Ainsi, jusqu'à t=1000 secondes, la valeur du facteur d'oubli est relativement faible et l'estimation converge rapidement, mais en présence de bruit. Cependant à partir de t = 1000 secondes, le facteur d'oubli augmente et l'estimation devient moins bruitée et donc plus précise.

En ce qui concerne le déclenchement du processus d'estimation et/ou d'actualisation du coefficient d'efficacité de freinage, pendant les couples d'instants successifs t1 et t2, on indique que les conditions à respecter sont de préférence :

- durée entre les instants t1 et t2 inférieure à une valeur déterminée, laquelle peut être fonction de la vitesse linéaire instantanée du véhicule. Ainsi que décrit précédemment dans la description cette durée peut être avantageusement un multiple de la période d'échantillonnage électronique des signaux.
- détection de l'existence d'une variation d'accélération longitudinale négative, $\Delta\gamma<0$, correspondant à une décélération du véhicule sur cette durée. Ceci permet d'éviter des problèmes issus de régimes transitoires et de non linéarités.

Ce procédé objet présente, vis-à-vis des solutions de l'art antérieur, l'avantage d'une plus grande simplicité de mise en œuvre en l'absence de complexité de calcul, de division proche de valeur 0, d'un coût réduit en espace mémoire car le processus d'estimation est exécuté au moyen de deux valeurs estimées successives seulement et d'un réglage d'initialisation rapide.

Le procédé permet enfin une maximisation de l'énergie récupérée, conformément à l'expression de la relation (4), car pour un même niveau de confort de freinage, et donc d'utilisation du véhicule, on dispose d'une transition plus rapide entre les deux actionneurs des organes de freinage.

Un dispositif pour un véhicule équipé d'un système de freinage à friction et d'un système de freinage par récupération d'énergie électrique, sera maintenant décrit en liaison avec la figure 4.

Sur la figure précitée, le dispositif porte la référence 1. Il est intégré au système de freinage du véhicule, lequel est réputé comporter un dispositif de répartition ou unité de commande de freinage. Cette unité, désignée « Commande Freinage », pilote à la fois le frein à friction représenté schématiquement par un disque et un étrier de freinage couplé à la roue « Roue » et un frein à récupération d'énergie électrique, noté FE, lequel est couplé mécaniquement à la roue considérée. L'ensemble précité est piloté de manière classique par l'ordinateur central du véhicule ou un calculateur dédié, noté CPU, lequel pilote à la fois le dispositif objet de l'invention 1, l'unité « Commande Freinage » et l'effecteur ef de commande du frein, représenté par une pédale rotative sur la figure précitée.

Le dispositif 1 comporte au moins un moyen de réception 10 de la variation de traînée de freinage globale entre au moins deux instants successifs t1,t2, par exemple un microcontrôleur.

Ce module 10 reçoit en outre les valeurs de paramètres physiques du véhicule, en particulier les paramètres de masse M et de rayon des roues R. Ces paramètres sont a priori des valeurs constantes, mais peuvent avantageusement être ajustés.

Le module 10 reçoit les valeurs échantillonnées de couple instantané de freinage électrique Ce et d'accélération linéaire $\gamma$ du véhicule. Ces grandeurs sont fournies par des capteurs adaptés respectivement par la commande freinage par exemple et sont échantillonnées à la fréquence d'échantillonnage électronique commandée par l'unité centrale de traitement CPU, et, bien entendu, par l'unité de commande de freinage.

À partir de ces valeurs d'entrée, le module 10 délivre la variation globale de traînée RMΔγ, la variation de couple de freinage électrique ΔCe et la variation de consigne de couple de freinage hydraulique ΔChc.

Bien entendu les valeurs de sortie du module 10 précitées sont calculées à partir des valeurs échantillonnées électroniquement ou délivrées par le calculateur dédié CPU.

En outre le dispositif 1 objet de l'invention comporte des moyens de traitement, par exemple un module 11. Ce module 11 peut par exemple comprendre un DSP.

Ce module effectue une estimation du coefficient de freinage hydraulique.

Ce module 11 comprend un estimateur de l'efficacité de freinage à friction vis-à-vis du couple de freinage à friction appliqué par le système de freinage à friction pour chaque estimation de rang k en fonction d'au moins une valeur d'efficacité de freinage pour une estimation de rang antérieur k - 1.

L'estimateur utilisé met en œuvre la méthode des moindres carrés récursifs à facteur d'oubli variable appliquée à deux instants d'évaluation successifs conformément au processus d'estimation, tel que décrit dans la description en liaison avec la relation (5) et représenté aux figures 3a et 3b.

Il délivre la valeur estimée α(k) de l'efficacité de freinage, sensiblement en temps réel, à la phase d'initialisation près, en raison de la rapidité de convergence de calcul de l'ensemble, à l'unité de commande de freinage, laquelle permet de délivrer la valeur de commande optimisée αChc de commande du frein à friction.

**Revendications**

1. Procédé de contrôle du freinage pour un véhicule équipé d'un moyen de freinage régénératif et d'un moyen de freinage complémentaire, comprenant :

   - recevoir (20) au moins une paire de deux valeurs de mesure d'accélération du véhicule, ladite au moins une paire de deux valeurs étant effectuée pendant une transition de freinage au cours de laquelle le moyen de freinage régénératif et/ou le système de freinage complémentaire appliquent un effort de freinage au véhicule, la transition de freinage correspondant à l'évolution de la répartition entre le moyen de freinage régénératif et le système de freinage complémentaire,
   - calculer (21) au moins une valeur de variation de l'accélération à partir respectivement de ladite au moins une paire de valeurs de mesure,
   - pour chaque valeur d'accélération reçue, recevoir (22) une valeur de couple appliqué par le moyen de freinage régénératif et une valeur de consigne de freinage complémentaire destinée au moyen de freinage complémentaire correspondant à l'instant de mesure de ladite valeur d'accélération,

   dans lequel l'estimation du coefficient d'efficacité du moyen de freinage complémentaire est effectuée à partir de la valeur de variation de l'accélération calculée, d'au moins une valeur de variation de couple appliqué par le moyen de freinage régénératif, et d'au moins une valeur de variation de consigne de freinage complémentaire destinée au moyen de freinage complémentaire.

2. Procédé selon la revendication 1, dans lequel, pour au moins une paire de deux valeurs de mesure d'accélération, lesdites deux valeurs correspondent à des instants de mesure séparés par une durée inférieure ou égale à 1 seconde.

3. Procédé selon l'une des revendications 1 à 2, dans lequel on reçoit une pluralité de valeurs de mesure d'accélération, une pluralité de valeurs de couple appliqué par le moyen de freinage régénératif et une pluralité de valeurs de consigne de freinage complémentaire, **caractérisé en ce que** on estime une valeur statistique du coefficient d'efficacité du moyen de freinage complémentaire.

4. Procédé selon la revendication 3, dans lequel la valeur statistique du coefficient d'efficacité est estimée selon une méthode des moindres carrés.

5. Procédé selon la revendication 4, dans lequel la méthode des moindres carrés mise en œuvre est une méthode récursive.

6. Procédé selon la revendication 5, dans lequel la méthode des moindres carrés récursive mise en œuvre est une méthode à facteur d'oubli variable.

7. Dispositif de contrôle du freinage (1) pour un véhicule équipé d'un moyen de freinage régénératif (FE) et d'un moyen de freinage complémentaire, comprenant :

- des moyens de réception (101) d'au moins une paire de deux valeurs de mesure d'accélération du véhicule, ladite au moins une paire de deux valeurs de mesure étant effectuée pendant une transition de freinage au cours de laquelle le moyen de freinage régénératif et/ou le système de freinage complémentaire appliquent un effort de freinage au véhicule, la transition de freinage correspondant à l'évolution de la répartition entre le moyen de freinage régénératif et le système de freinage complémentaire,
- des moyens de calcul (21) d'au moins une valeur de variation de l'accélération à partir respectivement de ladite au moins une paire de valeurs de mesure,
- des moyens de réception (10) d'au moins deux valeurs de couple appliqué par le moyen de freinage régénératif et d'au moins deux valeurs de consigne de freinage complémentaire destinée au moyen de freinage complémentaire, lesdites au moins deux valeurs de couple et de consigne correspondant à au moins deux instants de mesure correspondant à ladite au moins une paire de valeurs d'accélération,
- des moyens de traitement (11) pour estimer un coefficient d'efficacité du moyen de freinage complémentaire à partir de ladite valeur de variation de l'accélération, de ladite variation de couple appliqué par le moyen de freinage régénératif reçue, et de ladite variation de consigne de freinage complémentaire reçue.

8. Système de commande pour un véhicule équipé d'un moyen de freinage régénératif (FE) et d'un moyen de freinage complémentaire, comprenant :

- un dispositif de répartition d'une commande de freinage globale entre le moyen de freinage régénératif et le moyen de freinage complémentaire,
- un dispositif de contrôle (1) selon la revendication 7.

9. Véhicule automobile comprenant un moyen de freinage régénératif, un moyen de freinage complémentaire et un système de commande selon la revendication 8.


**Patentansprüche**

1. Verfahren zur Kontrolle der Bremsung für ein Fahrzeug, das mit einem regenerativen Bremsmittel und einem Ergänzungsbremsmittel ausgestattet ist, umfassend:

- Empfangen (20) mindestens eines Paares aus zwei Beschleunigungsmesswerten des Fahrzeugs, wobei das mindestens eine Paar aus zwei Werten während eines Bremsübergangs gebildet wird, während dessen das regenerative Bremsmittel und/oder das Ergänzungsbremssystem eine Bremskraft auf das Fahrzeug aufbringen, wobei der Bremsübergang der Entwicklung der Verteilung zwischen dem regenerativen Bremsmittel und dem Ergänzungsbremssystem entspricht,
- Berechnen (21) mindestens eines Variationswerts der Beschleunigung jeweils ausgehend von dem mindestens einen Messwertepaar,
- für jeden empfangenen Beschleunigungswert, Empfangen (22) eines Werts für das vom regenerativen Bremsmittel aufgebrachte Moment und eines für das Ergänzungsbremsmittel bestimmten Ergänzungsbremsungssollwerts, der dem Messzeitpunkt des Beschleunigungswerts entspricht,

wobei das Schätzen des Wirkungsgradkoeffizienten des Ergänzungsbremsmittels ausgehend vom berechneten Variationswert der Beschleunigung, von mindestens einem Variationswert für das vom regenerativen Bremsmittel aufgebrachte Moment und von mindestens einem für das Ergänzungsbremsmittel bestimmten Ergänzungsbremsungssollwert-Variationswert erfolgt.

2. Verfahren nach Anspruch 1, bei dem für mindestens ein Paar aus zwei Beschleunigungsmesswerten die beiden Werte Messzeitpunkten entsprechen, die durch eine Dauer kleiner oder gleich 1 Sekunde getrennt sind.

3. Verfahren nach einem der Ansprüche 1 bis 2, bei dem man eine Vielzahl von Beschleunigungsmesswerten, eine Vielzahl von Werten für das vom regenerativen Bremsmittel aufgebrachte Moment und eine Vielzahl von Ergänzungsbremsungssollwerten empfängt, **dadurch gekennzeichnet, dass** man einen statistischen Wert des Wirkungsgradkoeffizienten des Ergänzungsbremsmittels schätzt.

4. Verfahren nach Anspruch 3, bei dem der statistische Wert des Wirkungsgradkoeffizienten nach einer Methode der kleinsten Quadrate geschätzt wird.

5. Verfahren nach Anspruch 4, bei dem die eingesetzte Methode der kleinsten Quadrate eine rekursive Methode ist.

6. Verfahren nach Anspruch 5, bei dem die eingesetzte rekursive Methode der kleinsten Quadrate eine Methode mit variablem Vergessensfaktor ist.

7. Vorrichtung zur Kontrolle der Bremsung (1) für ein Fahrzeug, das mit einem regenerativen Bremsmittel (FE) und einem Ergänzungsbremsmittel ausgestattet ist, umfassend:

- Empfangsmittel (101) zum Empfangen mindestens eines Paares aus zwei Beschleunigungsmesswerten des Fahrzeugs, wobei das mindestens eine Paar aus zwei Messwerten während eines Bremsübergangs gebildet wird, während dessen das regenerative Bremsmittel und/oder das Ergänzungsbremssystem eine Bremskraft auf das Fahrzeug aufbringen, wobei der Bremsübergang der Entwicklung der Verteilung zwischen dem regenerativen Bremsmittel und dem Ergänzungsbremssystem entspricht,
- Rechenmittel (21) zum Berechnen mindestens eines Variationswerts der Beschleunigung jeweils ausgehend von dem mindestens einem Messwertepaar,
- Empfangsmittel (10) zum Empfangen von mindestens zwei Werten für das vom regenerativen Bremsmittel aufgebrachte Moment und von mindestens zwei für das Ergänzungsbremsmittel bestimmten Ergänzungsbremsungssollwerten, wobei die mindestens zwei Moment- und Sollwerte mindestens zwei Messzeitpunkten entsprechen, die dem mindestens einen Beschleunigungswertepaar entsprechen,
- Verarbeitungsmittel (11) zum Schätzen eines Wirkungsgradkoeffizienten des Ergänzungsbremsmittels ausgehend von dem Variationswert der Beschleunigung, von der empfangenen Variation des vom regenerativen Bremsmittel aufgebrachten Moments und von der empfangenen Ergänzungsbremsungssollwertvariation.

8. Steuerungssystem für ein Fahrzeug, das mit einem regenerativen Bremsmittel (FE) und einem Ergänzungsbremsmittel ausgestattet ist, umfassend:

- eine Vorrichtung zur Verteilung einer Gesamtbremssteuerung zwischen dem regenerativen Bremsmittel und dem Ergänzungsbremsmittel,
- eine Kontrollvorrichtung (1) nach Anspruch 7.

9. Kraftfahrzeug mit einem regenerativen Bremssystem, einem Ergänzungsbremsmittel und einem Steuerungssystem nach Anspruch 8.

**Claims**

1. Method for supervising braking for a vehicle equipped with a regenerative braking means and with a complementary braking means, comprising:

- receiving (20) at least one pair of two vehicle acceleration measurement values, said at least one pair of two values being taken during a braking transition during which the regenerative braking means and/or the complementary braking system are applying a braking force to the vehicle, the braking transition corresponding to the change in the apportioning between the regenerative braking means and the complementary braking system,
- calculating (21) at least one value for the variation in the acceleration based respectively on said at least one pair of measurement values,
- for each acceleration value received, receiving (22) a value for the torque applied by the regenerative braking means and a value for the complementary-braking setpoint intended for the complementary braking means corresponding to the instant of measurement of said acceleration value,

in which the estimation of the coefficient of efficiency of the complementary braking means is performed on the basis of the calculated acceleration variation value, of at least one value for the variation in the torque applied by the regenerative braking means, and of at least one value for the variation in the complementary-braking setpoint intended for the complementary braking means.

2. Method according to Claim 1, in which, for at least one pair of two acceleration measurement values, said two values correspond to measurement instants separated by a time less than or equal to 1 second.

**3.** Method according to one of Claims 1 and 2,
in which a plurality of acceleration measurement values, a plurality of values for torque applied by the regenerative braking means and a plurality of complementary-braking setpoint values are received, **characterized in that** a statistical value of the coefficient of efficiency of the complementary braking means is estimated.

**4.** Method according to Claim 3, in which the statistical value of the coefficient of efficiency is estimated according to a least squares method.

**5.** Method according to Claim 4, in which the least squares method implemented is a recursive method.

**6.** Method according to Claim 5, in which the recursive least squares method implemented is a method with variable omission factor.

**7.** Braking supervision device (1) for a vehicle equipped with a regenerative braking means (FE) and with a complementary braking means, comprising:

- means (101) for receiving at least one pair of two vehicle acceleration measurement values, said at least one pair of measurement values being taken during a braking transition during which the regenerative braking means and/or the complementary braking system are applying a braking force to the vehicle, the braking transition corresponding to the change in the apportioning between the regenerative braking means and the complementary braking system,
- means for calculating (21) at least one value for the variation in the acceleration based respectively on said at least one pair of measurement values,
- means (10) for receiving at least two values for the torque applied by the regenerative braking means and at least two values for the complementary-braking setpoint intended for the complementary braking means, said at least two torque and setpoint values corresponding to at least two measurement instants corresponding to said at least one pair of acceleration values,
- processing means (11) for estimating a coefficient of efficiency of the complementary braking means on the basis of said acceleration-variation value, of said received variation in the torque applied by the regenerative braking means, and of said received variation in complementary-braking setpoint.

**8.** Control system for a vehicle equipped with a regenerative braking means (FE) and with a complementary braking means, comprising:

- a device for apportioning an overall braking command between the regenerative braking means and the complementary braking means,
- a supervision device (1) according to Claim 7.

**9.** Motor vehicle comprising a regenerative braking means, a complementary braking means and a control system according to Claim 8.

Fig. 1 (art antérieur)

Fig. 2a

trk

rcpt γ(t1), γ(t2) — 20

Δγ := γ(t1) - γ(t2) — 21

rcpt Ce(t1), Ce(t2)
Chc(t1), Chc(t2) — 22

ΔCe := Ce (t1) - Ce (t2)
Δ Chc := Chc (t1) – Chc (t2) — 23

y (k) := RM Δγ - ΔCe
Φ (k) := ΔChc — 24

α (k) — 25

<u>Fig. 2b</u>

Fig. 3

Fig. 4

**EP 2 788 218 B1**

## RÉFÉRENCES CITÉES DANS LA DESCRIPTION

**Documents brevets cités dans la description**

- US 20080129110 A